# EUROPÄISCHE PATENTSCHRIFT

(11) **EP 2 498 065 B1**
(45) Veröffentlichungstag und Bekanntmachung des Hinweises auf die Patenterteilung: **12.12.2018**
(21) Anmeldenummer: 11194721.4
(22) Anmeldetag: 21.12.2011
(51) Int. Cl.: G01D 5/347

(54) **Baueinheit einer Winkelmesseinrichtung und Verfahren zur Herstellung dieser Baueinheit**
Component of an angle measuring device and method of manufacturing the same
Composant d'un dispositif de mesure d'angle et procédé de fabrication de ce composant

(30) Priorität: 10.03.2011 DE 102011005351
(43) Veröffentlichungstag der Anmeldung: 12.09.2012
(73) Patentinhaber: Dr. Johannes Heidenhain GmbH, 83301 Traunreut (DE)
(72) Erfinder: Ahrendt, Dirk, 83355 Grabenstätt-Erlstätt (DE)

(56) Entgegenhaltungen:
- EP-A2- 1 767 906
- DE-T2- 69 828 764
- US-A1- 2009 127 445

## Beschreibung

Die vorliegende Erfindung betrifft eine Baueinheit einer Winkelmesseinrichtung zur Messung von Drehbewegungen um eine Drehachse, mit einem Teilungsträger, der an einem Halter befestigt ist.

Eine derartige Baueinheit ist in der EP 0 386 268 B1 beschrieben. Dabei wurde bereits als vorteilhaft erkannt, einen Teilungsträger durch Kleben an der Unterseite des Teilungsträgers an einem Halter zu befestigen, so dass kein zentrales Loch in dem Teilungsträger erforderlich ist.

Nachteilig dabei ist, dass die Positionierung zwischen dem Teilungsträger und dem Halter schwierig realisierbar ist. Als Halter fungiert in den meisten Fällen eine Antriebswelle einer Antriebseinheit, so dass die Befestigung des Teilungsträgers nicht beim Hersteller des Teilungsträgers bzw. der Winkelmesseinrichtung erfolgt, sondern erst beim Hersteller der Antriebseinheit.

Die DE 698 28 764 T2 zeigt eine Baueinheit einer Winkelmesseinrichtung, bei der ein Halter in Form einer Welle direkt stirnseitig mit einem Teilungsträger verklebt ist.

Die US 2009/0127445 A1 und die EP 1 767 906 A2 zeigen Baueinheiten einer Winkelmesseinrichtung, bei denen jeweils eine Nabe stirnseitig mit einem Teilungsträger verklebt ist. Die Naben sind zur Aufnahme einer Welle ausgeführt.

Aufgabe der vorliegenden Erfindung ist es daher, eine Baueinheit für eine Winkeimesseinrichtung anzugeben, die eine einfache und stabile Montage eines Teilungsträgers ermöglicht.

Diese Aufgabe wird erfindungsgemäß durch eine Baueinheit mit den Merkmalen des Anspruchs 1 gelöst.

Demnach umfasst diese Baueinheit für eine Winkelmesseinrichtung ein Positionierelement, das mittels einer stoffschlüssigen Verbindung in Form einer Klebeverbindung an einem Teilungsträger befestigt ist. Das den Teilungsträger tragende Positionierelement ist in einer Ausnehmung eines Halters angeordnet, wobei die Ausnehmung das Positionierelement in radialer Richtung positioniert, indem diese für das Positionierelement in radialer Richtung eine spielfreie Passung bildet. Zur stabilen Befestigung des Teilungsträgers am Halter ist zwischen dem Teilungsträger und dem Halter ebenfalls eine stoffschlüssige Verbindung in Form einer Klebeverbindung vorgesehen.

Indem das Positionierelement mit einer senkrecht zur Drehachse verlaufenden Planfläche des Teilungsträgers verklebt wird, ist eine parallele Ausrichtung des Positionierelementes zur Drehachse gewährleistet. Die Klebeverbindung zwischen dem Teilungsträger und dem Halter erfolgt in einem Bereich, der von der Drehachse in radialer Richtung weiter entfernt ist als der Bereich, an dem die Klebung zwischen dem Teilungsträger und dem Positionierelement erfolgt. Dadurch ist eine relativ großflächige Klebung zwischen dem Teilungsträger und dem Halter gewährleistet. Diese großflächige und von der Drehachse radial entfernte Klebung zwischen dem Teilungsträger und dem Halter führt zu einer stabilen Befestigung, die auch bei hohen Beschleunigungen eine exakte Winkelübertragung von dem Halter -der vorzugsweise eine Antriebswelle einer Antriebseinrichtung ist- auf den Teilungsträger gewährleistet.

Durch die erfindungsgemäße Ausgestaltung ist die Massenverteilung der Baueinheit optimiert, so dass bei Einhaltung eines geringen Massenträgheitsmoments der Baueinheit trotzdem eine einfache und stabile Verbindung zwischen dem Teilungsträger und dem Halter erreicht wird.

Die Baueinheit ist somit insbesondere zur Messung von Drehbewegungen um die Drehachse geeignet, bei denen hohe Drehbeschleunigungen auftreten. Die Baueinheit eignet sich daher besonders zur hochgenauen Positionsmessung von Teilen, die eine Bewegung mit sich schnell ändernder Bewegungsrichtung ausführen, wie Schwingspiegel, pick and place Werkzeuge oder Bondwerkzeuge.

Eine Winkelmesseinrichtung mit der erfindungsgemäß ausgebildeten Baueinheit ist im Anspruch 6 angegeben.

Eine weitere Aufgabe der Erfindung besteht darin, ein Verfahren zur Herstellung einer Baueinheit für eine Winkelmesseinrichtung anzugeben, die eine einfache, präzise und stabile Montage erlaubt.

Diese Aufgabe wird erfindungsgemäß durch ein Verfahren mit den Merkmalen des Anspruchs 7 gelöst.

Demnach wird eine stoffschlüssige Verbindung in Form einer Klebeverbindung zwischen einem Teilungsträger und einem Positionierelement hergestellt. Das den Teilungsträger tragende Positionierelement wird in eine Ausnehmung des Halters eingesetzt, wobei die Ausnehmung das Positionierelement in radialer Richtung spielfrei positioniert. In dieser radial positionierten Stellung wird eine weitere Klebeverbindung zwischen dem Teilungsträger und dem Halter hergestellt.

Stoffschlüssige Verbindung bedeutet Fügen durch Kleben, Kitten, Löten oder Schweißen,

Kleben bedeutet Fügen der Fügeteile mittels eines Klebstoffes. Eine Klebeverbindung besteht aus den beiden Fügeteilen und der dazwischen liegenden Kleberschicht. Der Klebstoff kann durch physikalische Vorgänge wie Licht oder Wärme oder durch chemische Reaktionen ausgehärtet werden. Kleben hat den besonderen Vorteil, dass die zu fügenden Teile aus unterschiedlichen Materialien bestehen können und dass keine oder nur geringster Wärmeeintrag erfolgt. Das Klebeverfahren wird daher gemäß der Erfindung bevorzugt, da der Teilungsträger dann aus Glas oder Glaskeramik und der Halter aus Metall ausgeführt sein können.

Vorteile sowie Einzelheiten der vorliegenden Erfindung ergeben sich aus der nachfolgenden Beschreibung eines Ausführungsbeispiels anhand der beiliegenden Figuren.

Es zeigen
- Figur 1: eine Winkelmesseinrichtung mit einer erfindungsgemäß ausgestalteten Baueinheit;
- Figur 2: die Baueinheit der Winkelmesseinrichtung in perspektivischer Ansicht;
- Figur 3: die Komponenten der Baueinheit im Schnitt und während des Zusammenbaus, und
- Figur 4: die komplettierte Baueinheit gemäß der Figuren 2 und 3 im Schnitt.

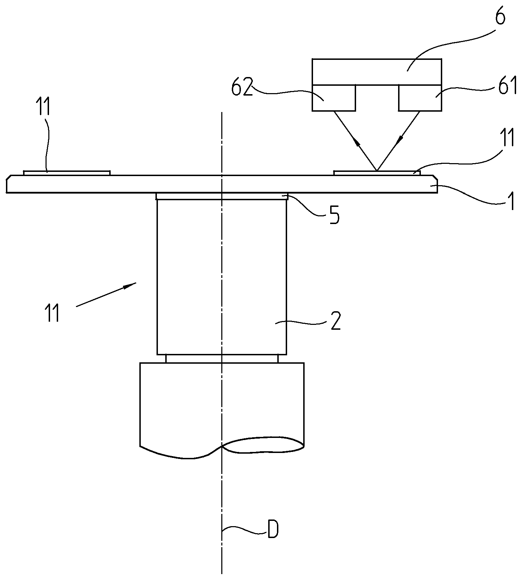

In Figur 1 ist eine Winkelmesseinrichtung mit einer erfindungsgemäß ausgestalteten Baueinheit 10 dargestellt. Die Baueinheit 10 weist einen Halter 2 in Form einer um eine Drehachse D drehbaren Welle auf. Das Ende des Halters 2 weist eine zur Drehachse D senkrecht verlaufende Befestigungsfläche zur klebenden Befestigung eines Teilungsträgers 1 auf. Die Klebeverbindung zwischen diesem Ende des Halters 2 und der Unterseite 13 des Teilungsträgers 1 erfolgt mittels eines Klebstoffs 5.

Der Teilungsträger 1 weist eine Teilung 11 auf, die lichtelektrisch abtastbar ausgestaltet ist. Zur Messung eines Drehwinkels X um die Drehachse D ist die Baueinheit 10 um eine Abtasteinrichtung 6 ergänzt. Diese Abtasteinrichtung 6 weist eine Lichtquelle 61 auf, die ein Lichtbündel aussendet, das auf die Teilung 11 trifft und dort bei einer Drehung der Baueinheit 10 relativ zur Abtasteinrichtung 6 positionsabhängig moduliert wird. Dieses positionsabhängig modulierte Licht wird reflektiert und trifft auf einen Lichtempfänger 62 der Abtasteinrichtung 6.

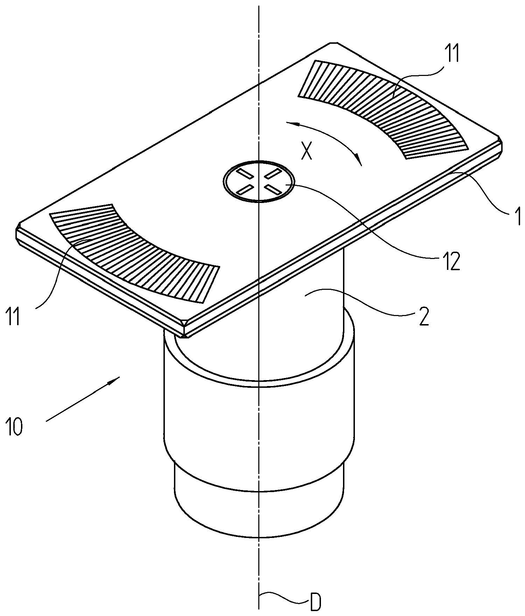

Anhand der Figuren 2 bis 4 wird nachfolgend die Baueinheit 10 der Winkelmesseinrichtung noch näher beschrieben.

Wie in Figur 2 erkennbar ist, ist der Teilungsträger 1 in diesem Beispiel rechteckförmig ausgeführt. Die Teilung 11 ist dabei nicht über den gesamten Umfang ausgeführt, da eine Positionsmessung nur über einen Bruchteil von 360° erfolgt, beispielsweise über 15°. Anstelle des rechteckförmigen Teilungsträgers 1 kann aber auch ein kreisrunder Teilungsträger verwendet werden, der eine Teilung über volle 360° aufweist, um über eine volle Umdrehung eine Positionsmessung zu ermöglichen.

Der Teilungsträger 1 ist scheibenförmig bzw. plattenförmig mit zwei ebenen und parallel zueinander verlaufenden Oberflächen ausgebildet. Er besteht vorzugsweise aus einem transparenten Material, insbesondere Glas bzw. Glaskeramik. Die Teilung 11 ist auf einer der beiden parallel zueinander verlaufenden Oberflächen des Teilungsträgers 1 als reflektierende lichtelektrisch abtastbare Struktur aufgebracht, dabei kann es sich um eine Amplitudenstruktur oder eine Phasenstruktur handeln. Die Teilung 11 ist eine Radialteilung, dessen Zentrum in der Drehachse D liegt. Anstelle der reflektierenden Teilung 11 kann auch eine im Durchlicht abtastbare Teilung am Teilungsträger 1 vorgesehen werden. Die Teilung 11 kann eine inkrementale Teilung zur Relativmessung einer Position oder ein Code zur absoluten Positionsmessung sein.

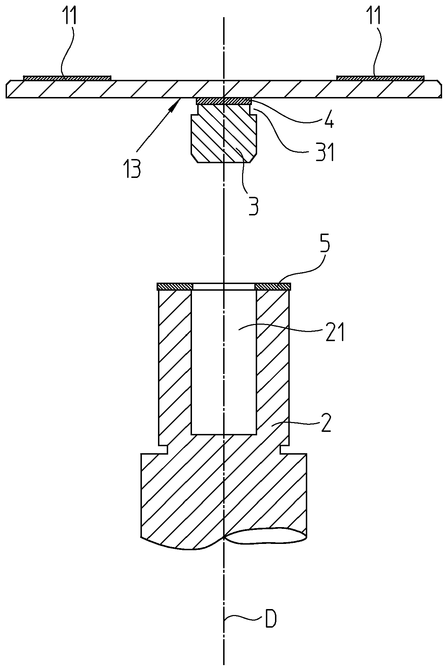

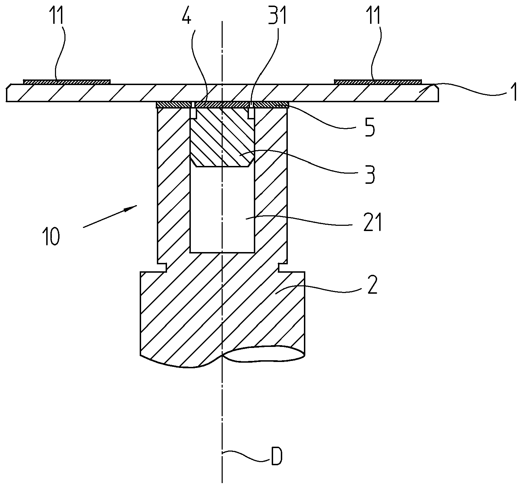

Anhand des in Figur 3 und in Figur 4 dargestellten Schnitts der Baueinheit 10 wird das Verfahren zur Herstellung der Baueinheit 10 näher erläutert.

Als erster Verfahrensschritt wird ein vorzugsweise stiftförmiges Positionierelement 3 im Zentrum der radialen Teilung 11 - also in der Drehachse D - am Teilungsträger 1 angeklebt. Diese Klebeverbindung erfolgt zwischen einer senkrecht zur Drehachse D verlaufenden Oberfläche 13 des Teilungsträgers 1 und einem parallel dazu verlaufenden stirnseitigen Ende des Positionierelementes 3 mittels eines Klebstoffs 4. Dieser Klebstoff 4 ist als dünnflächige axiale Schicht zwischen dem stirnseitigen Ende des Positionierelementes 3 und der senkrecht zur Drehachse D verlaufenden Oberfläche 13 des Teilungsträgers 1 vorgesehen. Es erfolgt also eine flächige Klebung, bei der kein Befestigungsloch in dem Teilungsträger 1 erforderlich ist. Die flächige Verbindung zwischen einer Stirnfläche des Halters 2 und der parallel dazu verlaufenden Unterseite 13 des Teilungsträgers 1 gewährleistet eine parallele Ausrichtung des Positionierelementes 3 zur Drehachse D des Teilungsträgers 1.

Der Klebstoff 4 kann vor dem Fügen des Teilungsträgers 1 und des Positionierelementes 3 auf die Stirnseite des Positionierelementes 3 oder die Unterseite 13 des Teilungsträgers 1 aufgebracht werden oder er wird seitlich an die bereits aneinander gedrängten Teile 1 und 3 eingebracht. Zum leichten Einbringen des Klebstoffs 4 kann das Positionierelement 3 auch eine parallel zur Drehachse D verlaufende Bohrung aufweisen, so dass der Klebstoff von der Rückseite her in die Bohrung in Richtung der Oberfläche 13 des Teilungsträgers 1 eingebracht werden kann.

Zur exakten Ausrichtung des Positionierelements 3 zum Zentrum der radialen Teilung 11 kann eine Markierung 12 des Teilungsträgers 1 dienen, die als Fadenkreuz und/oder als Ringmarkierung ausgebildet ist. Diese Markierung 12 ist vorzugsweise in einem gemeinsamen Verfahrensschritt mit der Teilung 11 auf dem Teilungsträger 1 aufgebracht worden und hat somit eine fest vorgegebene Zuordnung zur Teilung 11.

In einem nächsten Verfahrensschritt erfolgt die Verbindung des Teilungsträgers 1 mit dem Halter 2. Hierzu ist in dem Halter 2 eine parallel zur Drehachse D verlaufende, insbesondere zentrisch angeordnete Ausnehmung 21 vorgesehen, in die das, den Teilungsträger 1 tragende Positionierelement 3, eingesetzt wird. Die Ausnehmung 21 ist in radialer Richtung (senkrecht zur Drehachse D) derart dimensioniert, dass sie eine spielfreie Passung für das Positionierelement 3 bildet. Die Tiefe der Ausnehmung in Richtung der Drehachse D ist derart gewählt, dass nach erfolgtem Einsetzen des Positionierelementes 3 in die Ausnehmung 21 eine Klebeverbindung zwischen dem Halter 2 und dem Teilungsträger 1 ermöglicht wird, und zwar zwischen einer senkrecht zur Drehachse D verlaufenden Stirnfläche des Halters 2 und der zu dieser Stirnfläche parallel verlaufenden Oberfläche 13 des Teilungsträgers 1. Wie in Figur 3 dargestellt ist, wird hierzu ein Klebstoff 5 zwischen die ringförmige Stirnfläche des Halters 2 und der Unterseite 13 des Teilungsträgers 1 eingebracht, so dass sich eine in axialer Richtung dünne Klebstoffschicht ausbildet.

In Figur 4 ist die fertig zusammengefügte Baueinheit 10 im Schnitt dargestellt. Durch die erfindungsgemäß ausgestaltete Baueinheit 10 ist es nun möglich, den Teilungsträger 1 besonders einfach ohne spezielle Justierwerkzeuge an einen Halter 2, beispielsweise einer Antriebswelle, anzubauen. Der Hersteller des Teilungsträgers 1 kann diesen mit dem Positionierelement 3 vorkonfigurieren. Diese vorkonfigurierte Komponente kann dann vom Hersteller einer Antriebseinheit ohne aufwendige Montagearbeiten mit einer Antriebswelle verbunden werden. Das Positionierelement 3 sorgt in Verbindung mit der passgenauen Ausnehmung 21 für eine exakte radiale Zuordnung zwischen Teilungsträger 1 und Halter 2 und somit auch zwischen Teilung 11 und der Drehachse D. Die Klebeverbindung mit dem Klebstoff 5 sorgt für einen stabilen Kraftschluss zwischen dem Teilungsträger 1 und dem Halter 2, der vorzugsweise die genannte Antriebswelle einer Antriebseinheit ist.

Der Klebstoff 5 ist vorzugsweise ein mittels Strahlung aushärtbarer Klebstoff, insbesondere ein Klebstoff, der durch Bestrahlung mit UV-Licht aushärtet.

Dadurch ist es möglich, den Klebstoff 5 durch den Teilungsträger 1 hindurch mittels UV-Licht auszuhärten. Der Teilungsträger 1 ist hierzu aus einem für UV-Licht transparentem Werkstoff, insbesondere aus Glas oder Glaskeramik.

Auch der Klebstoff 4 ist vorzugsweise ein mittels Strahlung aushärtbarer Klebstoff, der durch den Teilungsträger 1 hindurch mit UV-Licht bestrahlt wird und dadurch aushärtet.

Die Verwendung von mittels Strahlung, insbesondere UV-Strahlung aushärtbaren Klebstoffen 4, 5 hat den Vorteil der gezielten und schnellen Aushärtung.

Wie insbesondere in Figur 4 dargestellt ist, weist das Positionierelement 3 eine Nut 31 auf. Diese Nut 31 kann einerseits zum gezielten Einbringen des Klebstoffs 4 zwischen dem Positionierelement 3 und dem Teilungsträger 1 dienen und andererseits als Tasche zur Aufnahme von überschüssigem Klebstoff 4 bzw. Klebstoff 5. Anstelle der Nut 31 kann zu diesem Zweck nur eine Fase am Positionierelement und / oder am Halter 2 vorgesehen sein. Zur Aufnahme von Klebstoff 4 kann im Positionierelement 3 auch eine Ausnehmung vorgesehen sein, wie beispielsweise in der genannten EP 0 386 268 B1 vorgeschlagen. Auch am stirnseitigen Ende des Halters 2 kann eine Ausnehmung zur Aufnahme von Klebstoff 5 vorgesehen sein.

Die Teilung 11 ist im dargestellten Beispiel lichtelektrisch abtastbar, da dieses Abtastprinzip eine hochgenaue Positionsmessung gewährleistet. Die Erfindung ist aber nicht darauf beschränkt, die Teilung kann beispielsweise auch magnetisch, kapazitiv oder induktiv abtastbar ausgestaltet sein.

## Patentansprüche

1. Baueinheit für eine Winkelmesseinrichtung zur Messung von Drehbewegungen um eine Drehachse (D), mit
einem Teilungsträger (1), der an einem Halter (2) befestigt ist, wobei
- an dem Teilungsträger (1) ein Positionierelement (3) mittels einer ersten stoffschlüssigen Verbindung befestigt ist, die eine Klebeverbindung ist, die zwischen dem Teilungsträger (1) und dem Positionierelement (3) mittels eines ersten Klebstoffs (4) ausgeführt ist, der axial zwischen dem Teilungsträger (1) und dem Positionierelement (3) angeordnet ist,
- das den Teilungsträger (1) tragende Positionierelement (3) in einer Ausnehmung (21) des Halters (2) angeordnet ist, wobei die Ausnehmung (21) derart dimensioniert ist, dass diese das Positionierelement (3) in radialer Richtung spielfrei positioniert,
- zwischen dem Teilungsträger (1) und dem Halter (2) eine zweite stoffschlüssige Verbindung vorgesehen ist, die eine Klebeverbindung ist, die zwischen dem Teilungsträger (1) und dem Halter (2) mittels eines zweiten Klebstoffs (5) ausgeführt ist, der axial zwischen dem Teilungsträger (1) und dem Halter (2) angeordnet ist, und
- die zweite Klebeverbindung von der Drehachse (D) weiter entfernt ist als die erste Klebeverbindung.

2. Baueinheit nach Anspruch 1, **dadurch gekennzeichnet, dass** der erste Klebstoff (4) ein mittels UV-Strahlung aushärtbarer Klebstoff ist.

3. Baueinheit nach einem der vorhergehenden Ansprüche, **dadurch gekennzeichnet, dass** der zweite Klebstoff (5) ein mittels UV-Strahlung aushärtbarer Klebstoff ist.

4. Baueinheit nach einem der vorhergehenden Ansprüche, **dadurch gekennzeichnet, dass** der Teilungsträger (1) aus einem für UV-Strahlung transparenten Werkstoff besteht.

5. Baueinheit nach einem der vorhergehenden Ansprüche, **dadurch gekennzeichnet, dass** der Halter (2) eine Antriebswelle einer Antriebsbaueinheit ist.

6. Winkelmesseinrichtung mit einer Baueinheit (10) nach einem der vorhergehenden Ansprüche und mit einer Abtasteinrichtung (6) zur Abtastung des Teilungsträgers (1), wobei die Baueinheit (10) um die Drehachse (D) relativ zur Abtasteinrichtung (6) drehbar ist.

7. Verfahren zur Herstellung einer Baueinheit für eine Winkelmesseinrichtung zur Messung von Drehbewegungen um eine Drehachse (D), bei der ein Teilungsträger (1) an einem Halter (2) befestigt wird, mit folgenden Verfahrensschritten:
- Herstellen einer ersten stoffschlüssigen Verbindung zwischen dem Teilungsträger (1) und einem Positionierelement (3), wobei die erste stoffschlüssige Verbindung zwischen dem Teilungsträger (1) und dem Positionierelement (3) mittels eines ersten Klebstoffs (4) ausgeführt wird;
- Einbringen des den Teilungsträger (1) tragenden Positionierelementes (3) in eine Ausnehmung (21) des Halters (2), wobei die Ausnehmung (21) das Positionierelement (3) in radialer Richtung spielfrei positioniert, und
- Herstellen einer zweiten stoffschlüssigen Verbindung zwischen dem Teilungsträger (1) und dem Halter (2), wobei die zweite stoffschlüssige Verbindung zwischen dem Teilungsträger (1) und dem Halter (2) mittels eines zweiten Klebstoffs (5) ausgeführt wird, und die zweite stoffschlüssige Verbindung von der Drehachse (D) weiter entfernt ist als die erste stoffschlüssige Verbindung.

8. Verfahren nach Anspruch 7, **dadurch gekennzeichnet** der erste Klebstoff (4) durch den Teilungsträger (1) hindurch mit UV-Licht bestrahlt wird und dadurch aushärtet.

9. Verfahren nach einem der vorhergehenden Ansprüche 7 bis 8, **dadurch gekennzeichnet** der zweite Klebstoff (5) durch den Teilungsträger (1) hindurch mit UV-Licht bestrahlt wird und dadurch aushärtet.

## Claims

1. Component for an angle measuring device for measuring rotational movements about an axis of rotation (D), comprising
a graduation carrier (1), which is fixed to a holder (2), wherein
- a positioning element (3) is fixed to the graduation carrier (1) by means of a first integral connection, which is an adhesive connection which is made between the graduation carrier (1) and the positioning element (3) by means of a first adhesive (4), which is arranged axially between the graduation carrier (1) and the positioning element (3),
- the positioning element (3) carrying the graduation carrier (1) is arranged in a recess (21) in the holder (2), wherein the recess (21) is dimensioned in such a way that it positions the positioning element (3) in the radial direction without play,
- between the graduation carrier (1) and the holder (2), a second integral connection is provided, which is an adhesive connection which is made between the graduation carrier (1) and the holder (2) by means of a second adhesive (5), which is arranged axially between the graduation carrier (1) and the holder (2), and
- the second adhesive connection is further removed from the axis of rotation (D) than the first adhesive connection.

2. Component according to Claim 1, **characterized in that** the first adhesive (4) is an adhesive that can be cured by means of UV radiation.

3. Component according to one of the preceding claims, **characterized in that** the second adhesive (5) is an adhesive that can be cured by means of UV radiation.

4. Component according to one of the preceding claims, **characterized in that** the graduation carrier (1) consists of a material that is transparent to UV radiation.

5. Component according to one of the preceding claims, **characterized in that** the holder (2) is a drive shaft of a drive component.

6. Angle measuring device comprising a component (10) according to one of the preceding claims and having a scanning device (6) for scanning the graduation carrier (1), wherein the component (10) can be rotated about the axis of rotation (D) relative to the scanning device (6).

7. Method for manufacturing a component for an angle measuring device for measuring rotational movements about an axis of rotation (D), in which a graduation carrier (1) is fixed to a holder (2), having the following method steps:
- producing a first integral connection between the graduation carrier (1) and a positioning element (3), wherein the first integral connection between the graduation carrier (1) and the positioning element (3) is made by means of a first adhesive (4),
- introducing the positioning element (3) carrying the graduation carrier (1) into a recess (21) in the holder (2), wherein the recess (21) positions the positioning element (3) in the radial direction without play, and
- producing a second integral connection between the graduation carrier (1) and the holder (2), wherein the second integral connection between the graduation carrier (1) and the holder (2) is made by means of a second adhesive (5), and the second integral connection is further removed from the axis of rotation (D) than the first integral connection.

8. Method according to Claim 7, **characterized in that** the first adhesive (4) is irradiated with UV light through the graduation carrier (1) and cured as a result.

9. Method according to one of the preceding Claims 7 to 8, **characterized in that** the second adhesive (5) is irradiated with UV light through the graduation carrier (1) and cured as a result.

## Revendications

1. Composant d'un dispositif de mesure d'angle pour la mesure de mouvements de rotation autour d'un axe de rotation (D), avec un support de graduations (1) qui est fixé sur un appui (2), dans lequel
- un élément de positionnement (3) est fixé sur le support de graduations (1) au moyen d'une première liaison matérielle, qui est une liaison collée, qui est réalisée entre le support de graduations (1) et l'élément de positionnement (3) au moyen d'une première colle (4), qui est disposée axialement entre le support de graduations (1) et l'élément de positionnement (3),
- l'élément de positionnement (3) portant le support de graduations (1) est disposé dans un évidement (21) de l'appui (2), dans lequel l'évidement (21) est dimensionné de telle manière que celui-ci positionne l'élément de positionnement (3) en direction radiale sans jeu,
- il est prévu entre le support de graduations (1) et l'appui (2) une deuxième liaison matérielle, qui est une liaison collée, qui est réalisée entre le support de graduations (1) et l'appui (2) au moyen d'une deuxième colle (5), qui est disposée axialement entre le support de graduations (1) et l'appui (2), et
- la deuxième liaison matérielle est plus éloignée de l'axe de rotation (D) que la première liaison matérielle.

2. Composant selon la revendication 1, **caractérisé en ce que** la première colle (4) est une colle durcissable au moyen d'un rayonnement UV.

3. Composant selon l'une quelconque des revendications précédentes, **caractérisé en ce que** la deuxième colle (5) est une colle durcissable au moyen d'un rayonnement UV.

4. Composant selon l'une quelconque des revendications précédentes, **caractérisé en ce que** le support de graduations (1) est constitué d'un matériau transparent pour un rayonnement UV.

5. Composant selon l'une quelconque des revendications précédentes, **caractérisé en ce que** l'appui (2) est un1. arbre d'entraînement d'un composant d'entraînement.

6. Dispositif de mesure d'angle avec un composant (10) selon l'une quelconque des revendications précédentes et avec un dispositif de lecture (6) pour la lecture du support de graduations (1), dans lequel le composant (10) peut tourner autour de l'axe de rotation (D) par rapport au dispositif de lecture (6).

7. Procédé de fabrication d'un composant de dispositif de mesure d'angle pour la mesure de mouvements de rotation autour d'un axe de rotation (D), dans lequel on fixe un support de graduations (1) à un appui (2), présentant les étapes suivantes:
- réalisation d'une première liaison matérielle entre le support de graduations (1) et un élément de positionnement (3), dans lequel on réalise la première liaison matérielle entre le support de graduations (1) et l'élément de positionnement (3) au moyen d'une première colle (4),
- introduction de l'élément de positionnement (3) portant le support de graduations (1) dans un évidement (21) de l'appui (2), dans lequel l'évidement (21) positionne l'élément de positionnement (3) en direction radiale sans jeu, et
- réalisation d'une deuxième liaison matérielle entre le support de graduation (1) et l'appui (2), dans lequel on réalise la deuxième liaison matérielle entre le support de graduations (1) et l'appui (2) au moyen d'une deuxième colle (5), et la deuxième liaison matérielle est plus éloignée de l'axe de rotation (D) que la première liaison matérielle.

8. Procédé selon la revendication 7, **caractérisé en ce que** la première colle (4) est irradiée à travers le support de graduations (1) avec une lumière UV et est de ce fait durcie.

9. Procédé selon une des revendications précédentes 7 à 8, **caractérisé en ce que** la deuxième colle (5) est irradiée à travers le support de graduations (1) avec une lumière UV et est de ce fait durcie.
